# FASCICULE DE BREVET EUROPEEN

(11) **EP 2 102 049 B1**
(45) Date de publication et mention de la délivrance du brevet: **19.10.2011**
(21) Numéro de dépôt: 07802937.8
(22) Date de dépôt: 28.08.2007
(51) Int. Cl.: B60T 8/48

(54) **INSTALLATION DE FREINAGE POUR VEHICULE AUTOMOBILE**
KRAFTFAHRZEUGBREMSANORDNUNG
MOTOR VEHICLE BRAKING ASSEMBLY

(30) Priorité: 08.09.2006 FR 0607943
(43) Date de publication de la demande: 23.09.2009
(73) Titulaire: Robert Bosch GmbH, 70442 Stuttgart (DE)
(72) Inventeur: BEYLERIAN, Bruno, F-95380 Louvres (FR); NEN, Yannick, F-91290 Arpajon (FR); DURAND, Etienne, F-75014 Paris (FR); MARLHE, Nicolas, F-95670 Marly La Ville (FR); PIEL, Jean-Marc, F-93190 Livry Gargan (FR); HURWIC, Aleksander, F-75020 Paris (FR)
(74) Mandataire: Hurwic, Aleksander Wiktor
(86) Numéro de dépôt international: PCT/EP2007/058902
(87) Numéro de publication internationale: WO 2008/028840

(56) Documents cités:
- EP-A2- 0 641 697
- DE-A1- 4 014 052
- FR-A1- 2 645 816
- JP-A- 61 160 343

## Description

La présente invention concerne une installation de freinage pour véhicule automobile, cette installation comprenant un réservoir de liquide de frein un maître-cylindre commandé par une pédale de frein et relié à des circuits d'alimentation des freins de roues, ainsi qu'un groupe hydraulique comprenant des pompes de mise en pression de liquide de frein, ces pompes étant reliées aux circuits d'alimentation des freins de roue et étant commandées par un calculateur.

Dans une telle installation, le freinage est commandé principalement par le conducteur du véhicule au moyen de la pédale de frein qui est reliée aux pistons du maître-cylindre par un servomoteur d'assistance pneumatique, l'action du conducteur sur la pédale de frein déterminant le freinage du véhicule.

Le fonctionnement des pompes de mise en pression du liquide de frein est commandé par le calculateur à des fins d'anti-patinage des roués, d'anti-blocage des roues et de contrôle de stabilité de trajectoire, le calculateur commandant en même temps que les pompes des électrovalves qui sont montées dans les circuits d'alimentation des freins de roues, pour pouvoir agir sélectivement sur l'un et/ou sur l'autre des freins des roues du véhicule.

**Par ailleurs, le document** FR 2 645 816 **fait état d'un système de freinage comportant un maître cylindre et réservoir de liquide de frein déporté. En outre, le document** EP 0641697 **dispose de circuit de freinage comportant de telles électrovalves.**

Il est classique dans ces installations qu'un réservoir de liquide de frein soit monté sur le maître-cylindre et communique avec chaque chambre de celui-ci par des conduits d'alimentation et de retour de liquide de frein, les pistons du maître-cylindre étant équipés de conduits et de clapets de passage de liquide de frein. Cet agencement connu a l'inconvénient de présenter des courses mortes et d'augmenter le nombre des composants du maître-cylindre.

La présente invention a notamment pour but d'éviter ces inconvénients de la technique antérieure.

**L'invention a pour objet une installation de freinage pour véhicules automobiles telle que revendiquée dans les revendications**

Elle a pour objet une installation du type précité, dont le maître-cylindre a une structure plus simple que dans la technique antérieure et comprend moins de composants et dans lequel les courses mortes sont supprimées ou au moins réduites.

Elle propose à cet effet une installation de freinage pour véhicule automobile, comprenant un réservoir de liquide de frein, un maître-cylindre commandé par une pédale de frein et relié à des circuits d'alimentation des freins des roues, et un groupe hydraulique comprenant des pompes de mise en pression du liquide de frein, reliées aux circuits d'alimentation des freins de roues et commandées par un calculateur, cette installation étant caractérisée en ce que le réservoir de liquide de frein est reliée auxdites pompes par des premières électrovalves commandées par le calculateur et est indépendant du maître-cylindre, et en ce qu'un orifice calibré et un clapet anti-retour s'opposant au retour du liquide de frein vers le réservoir raccordés en parallèle sont montés dans les conduits reliants le réservoir a chaque première électrovalve.

Il n'est plus nécessaire de prévoir des conduits et des clapets de passage de liquide de frein dans les pistons du maître-cylindre dont la structure est notablement simplifiée.

Cela permet de réduire ou de supprimer les courses mortes dans le maître-cylindre et d'installer le réservoir à distance du maître-cylindre, avantageusement sur le groupe hydraulique précité.

La liaison du réservoir aux pompes du groupe hydraulique se fait directement sans passer par le maître-cylindre, ce qui permet d'augmenter le débit de liquide de frein alimentant les pompes, de réduire les temps de montée en pression dans les conduits d'alimentation des freins des roues, et de réduire également les bruits parasites liés au transfert de liquide de frein vers les pompes du groupe hydraulique.

Selon une caractéristique **avantageuse** de l'invention, des secondes électrovalves commandées par le calculateur sont montées dans les circuits d'alimentation des freins de roues entre les sorties du maître-cylindre et les sorties des pompes.

Cette caractéristique permet d'isoler le maître-cylindre du groupe hydraulique lors du fonctionnement des pompes du groupe hydraulique, de sorte que les montées en pression du liquide de frein dans les circuits d'alimentation des freins de roues qui sont dues au fonctionnement des pompes, n'ont pas d'effet sur le maître-cylindre, grace à la fermeture des secondes électrovalves, et ne sont donc pas ressenties à la pédale.

Ces secondes électrovalves sont ouvertes en position de repos pour permettre le serrage des freins à partir du maître-cylindre et sont commandées en fermeture par le calculateur, lors du fonctionnement du groupe hydraulique.

Des clapets anti-retour sont montés en parallèle sur les secondes électrovalves pour s'opposer au retour du liquide de frein depuis les freins de roues vers le maître-cylindre.

**Selon l'invention**, un orifice calibré et un clapet anti-retour, raccordés l'un à l'autre en parallèle sont montés dans les conduits reliant le réservoir aux entrées des pompes.

Selon l'invention, les premières électrovalves relient le réservoir aux sorties des pompes dont les entrées sont reliées au réservoir par des conduits comportant des clapets anti-retour s'opposant au passage du liquide de frein en direction du réservoir.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
- la figure 1 représente schématiquement une installation de freinage selon l'état de la technique ;
- la figure 2 est une vue schématique en coupe du maître-cylindre de l'installation de la figure 1 ;
- la figure 3 illustre schématiquement l'installation de freinage selon l'invention ;
- **la** **figure 4** **illustre schématiquement une autre installation de freinage selon** l'état de la technique.

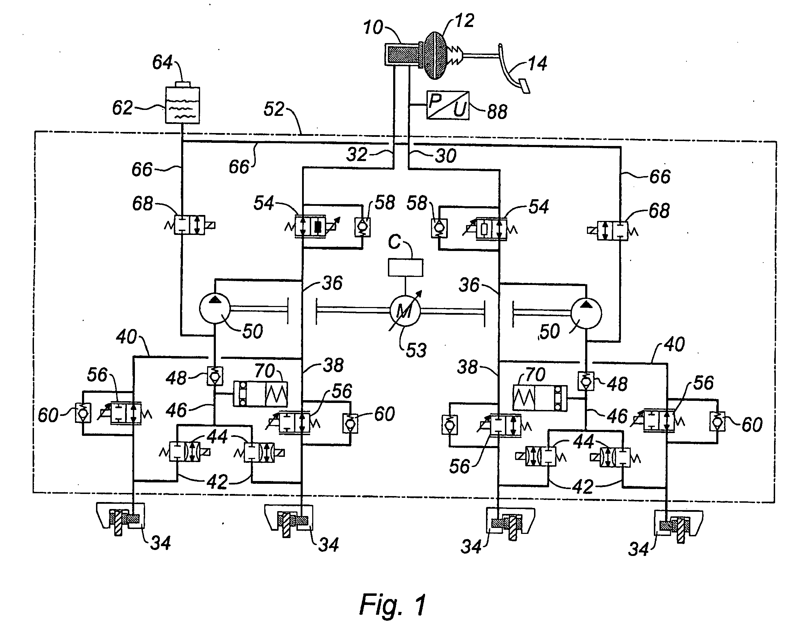

L'installation de freinage représentée schématiquement en figure 1 comprend un maître-cylindre 10 associé à un servomoteur 12 d'assistance pneumatique commandé par une pédale de frein 14, de la façon habituelle.

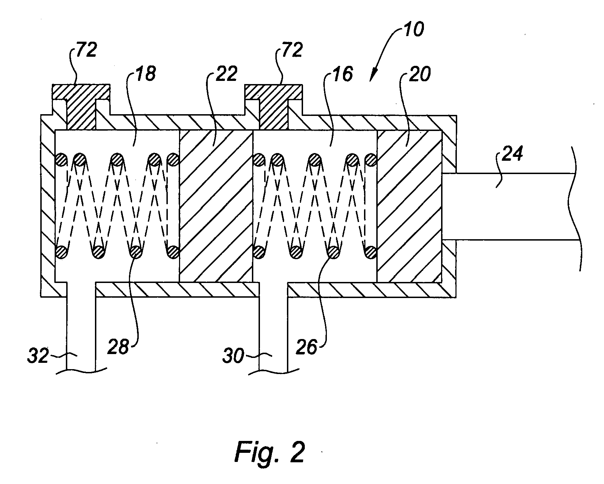

Le maître-cylindre 10 est un maître-cylindre tandem représenté en détail en figure 2, qui comprend deux chambres de travail primaire 16 et secondaire 18 délimitées dans le corps du maître-cylindre par un piston primaire 20 et un piston secondaire 22, le piston primaire 20 étant associé par une tige de poussée 24 au servomoteur 12 d'assistance pneumatique.

Des ressorts de rappel 26 et 28 sont disposés entre les pistons primaire 20 et secondaire 22 et entre le piston secondaire 22 et l'extrémité avant du corps du maître-cylindre 10. Chaque chambre de travail 12, 14 est reliée par un conduit 30, 32 à des circuits d'alimentation des freins 34 montés sur les roues avant et sur les roues arrière du véhicule automobile.

De façon classique, l'installation de freinage comprend deux circuits indépendants montés en parallèle et dont l'un est destiné à alimenter deux des freins de roues 34 à partir du conduit 30 de sortie du maître-cylindre et dont l'autre est destiné à alimenter les deux autres freins de roues 34 à partir de l'autre conduit 32 de sortie du maître-cylindre, ces deux circuits étant identiques. Pour simplifier la description, un seul de ces circuits sera décrit dans ce qui suit.

Chaque circuit comprend un conduit d'alimentation 36 qui relie un conduit de sortie 30, 32 du maître-cylindre à deux conduits parallèles 38, 40 alimentant chacun un frein de roue 34. Sur chaque conduit d'alimentation 38, 40 est branché un conduit de retour 42 équipé d'une électrovalve 44 et raccordé par un conduit commun 46 comportant un clapet anti-retour 48 à l'entrée d'une pompe 50 faisant partie d'un groupe hydraulique 52 ayant des fonctions d'anti-patinage de roues, d'anti-blocage des roues et de contrôle de stabilité de trajectoire du véhicule.

Ce groupe hydraulique comprend deux pompes 50 précitées, une pour chaque circuit d'alimentation des freins de roue, ces deux pompes étant entrainées par un moteur commun 54 commandé par un calculateur C.

Dans chaque circuit d'alimentation, la sortie de la pompe 50 est reliée au conduit d'alimentation 36 précité, entre une électrovalve 54 montée dans le conduit de sortie 30, 32 du maître-cylindre et deux électrovalves 56 montées dans les conduits 38, 40 qui alimentent les deux freins de roues 34 du circuit. Un clapet anti-retour 58 est branché en dérivation sur l'électrovalve 54, dans le sens s'opposant au retour du liquide de frein vers le maître-cylindre 10, et des clapets anti-retour 60 sont branchés en dérivation sur les électrovalves 56 d'alimentation des freins de roues, dans le sens s'opposant au retour du liquide de frein depuis les freins de roues.

Un réservoir 62 de liquide de frein, du type comportant un bouchon 64 de remplissage, est monté sur le groupe hydraulique 52 et est relié par des conduits 66 comportant chacun une électrovalve 68 aux entrées des pompes 50 du groupe hydraulique. Ces électrovalves 68, comme les électrovalves 44 montées dans les conduits de retour des freins 34, sont du type fermé en condition de repos et sont commandées en ouverture par le calculateur C.

Les électrovalves 54 et 56 montées dans les conduits d'alimentation des freins de roues 34 sont du type ouvert en condition de repos et sont commandées en fermeture par le calculateur C.

Enfin, un accumulateur de pression 70 est branché sur le conduit commun de retour 46 en amont du clapet anti-retour 48.

Le réservoir 62 de liquide de frein monté sur le groupe hydraulique 52 n'est relié qu'aux entrées des pompes 50 et ne comprend pas de conduit de liaison aux chambres de travail 16, 18 du maître-cylindre 10. Comme on peut le voir en figure 2, la structure de ce maître-cylindre est nettement simplifiée par rapport à la technique traditionnelle, du fait de l'absence de ces conduits de liaison et également du fait de l'absence de passages de liquide de frein dans les pistons 20 et 22 du maître-cylindre et des clapets montés dans ces passages.

Les chambres 16 et 18 du maître-cylindre peuvent donc être remplies en permanence de liquide de frein, mis sous pression par un déplacement des pistons 20, 22 vers l'avant.

Des orifices de purge fermés par des bouchons 72 sont formés dans le corps du maître-cylindre 10 aux extrémités avant des chambres de travail 16, 18.

Le fonctionnement de cette installation de freinage est la suivante :

Lorsqu'une opération de freinage est commandée par le conducteur qui appuie sur la pédale de frein 14, le liquide de frein est mis sous pression dans les conduits de sortie 30, 32 du maître-cylindre et dans les conduits 36, 38, 40 d'alimentation des freins de roues 34 par déplacement vers l'avant des pistons 20, 22 du maître-cylindre, le temps de réponse du circuit de freinage étant très rapide en raison de l'absence des courses mortes dans le maître-cylindre.

Les électrovalves 54, 56 montées dans les conduits d'alimentation des freins de roues restent en position ouverte tant qu'elles ne sont pas commandées en fermeture par le calculateur C.

Lorsque le calculateur C détecte une condition dans laquelle une action sur un frein de roue 34 est nécessaire, pour éviter le blocage ou le patinage de la roue ou pour stabiliser la trajectoire du véhicule, il commande la fermeture des électrovalves 54 reliant le maître-cylindre 10 aux circuits d'alimentation des freins de roue 34, et l'ouverture d'une ou des deux électrovalves 68 alimentant les pompes 50 à partir du réservoir 62. Le calculateur C peut ainsi régler la pression du liquide de frein alimentant chaque frein de roues 34 à la valeur désirée, pour obtenir le résultat voulu.

Il peut également commander, pendant un bref instant, l'ouverture des électrovalves 54 montées dans les conduits de sortie 30, 32 du maître-cylindre pendant le fonctionnement des pompes 50, pour réalimenter les chambres de travail du maître-cylindre en liquide de frein, si nécessaire.

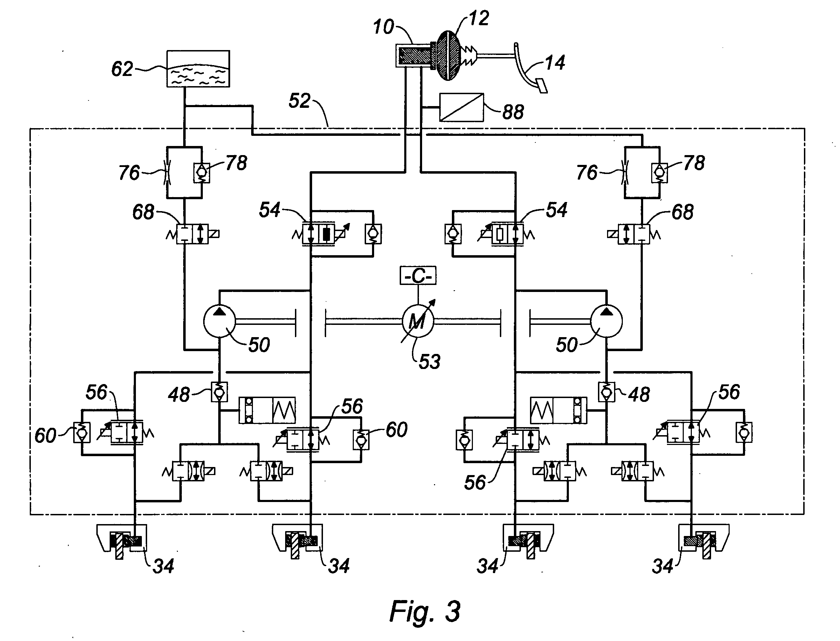

L'installation de freinage selon l'invention qui a été représentée en figure 3 diffère de celle des figures 1 et 2 en ce que le réservoir 62 de liquide de frein ne comporte pas de bouchon de remplissage et est fermée de façon étanche, ce réservoir étant raccordé à chaque électrovalve 68 prévue à l'entrée d'une pompe 50 du groupe hydraulique 52 par un ensemble comprenant un orifice calibré 76 et un clapet anti-retour 78 montés en parallèle, le clapet anti-retour 78 s'opposant au retour du liquide de frein vers le réservoir 62.

La fonction de cet ensemble 76, 78 est de permettre une alimentation sans restriction de chaque pompe 50 sous commande du calculateur C, l'orifice calibré 76 créant une perte de charge qui évite une suppression trop importante et dangereuse du réservoir 62 au retour du liquide de frein vers le réservoir, lorsque la pression dans les freins de roues 34 est trop élevée.

Le retour du liquide de frein par l'orifice calibré 76 produit, pendant un temps bref, un faible couple résiduel de freinage mais garantit le réservoir 62 contre tout risque d'explosion. Pour le reste, l'installation de freinage de la figure 3 est identique à celle de la figure 1.

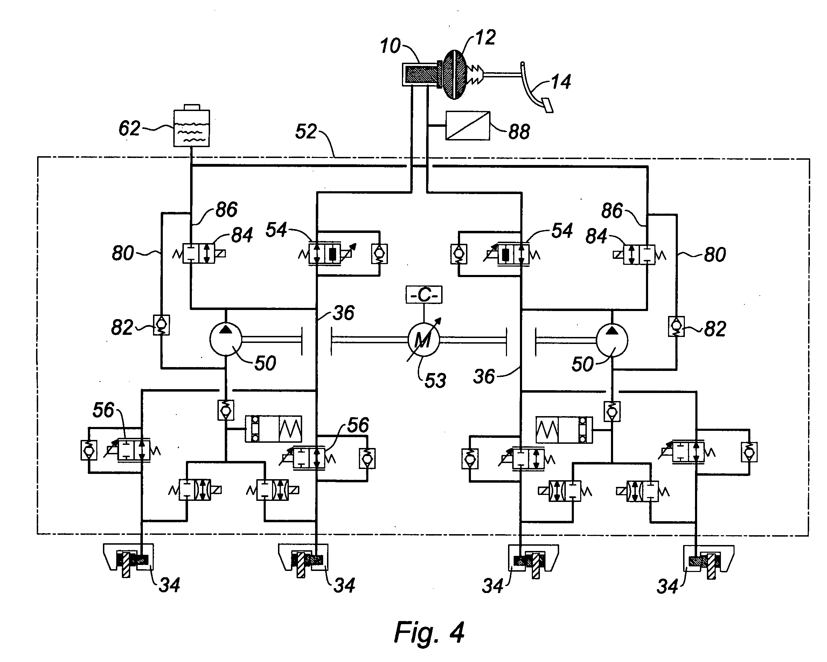

Dans une réalisation représentée schématiquement en figure 4, l'installation de freinage diffère de celle de la figure 1 en ce que le réservoir 62 de liquide de frein, monté sur le groupe hydraulique 52, est relié à l'entrée de chaque pompe 50 par un conduit 80 équipé d'un clapet anti-retour 82 monté dans le sens s'opposant au retour du liquide de frein vers le réservoir. Une électrovalve 84 est montée dans un conduit 86 reliant la sortie de la pompe 50 au réservoir 62. Comme dans l'installation de la figure 1, la sortie de chaque pompe 50 est reliée au conduit 36 d'alimentation des freins de roues 34, entre l'électrovalve 54 montée dans le conduit de sortie correspondant 30, 32 du maître-cylindre et les électrovalves 56 d'alimentation des freins de roues. Pour le reste, l'installation représentée en figure 4 est identique à celle de la figure 1.

Les électrovalves 84 montées dans les conduits 86 reliant les sorties des pompes 50 au réservoir 62 sont fermées en condition de repos et commandées en ouverture par le calculateur C. Elles permettent un retour du liquide de frein vers le réservoir 62, sous commande du calculateur.

Dans les modes de réalisation qui ont été décrits et qui sont représentés dans les figures 1, 3 et 4, une commande de freinage par action du conducteur sur la pédale de frein 14 est détectée au moyen d'un capteur de pression 88 monté dans un des conduits de sortie du maître-cylindre 10. En variante, on peut détecter cette commande de freinage en utilisant le signal de sortie d'un capteur de position ou de déplacement qui est associé à la pédale de frein 14 et qui commande l'allumage des feux stop, c'est-à-dire des lampes des circuits de signalisation de freinage, lorsque le conducteur exerçant un appui sur la pédale de frein 14 lui fait quitter sa position de repos.

## Revendications

1. Installation de freinage pour véhicule automobile, comprenant un réservoir (62) de liquide de frein, un maître-cylindre (10) commandé par une pédale de frein (14) et relié à des circuits d'alimentation de freins de roues (34), et un groupe hydraulique (52) comprenant des pompes (50) de mise en pression de liquide de frein, reliées au circuit d'alimentation des freins de roues et commandées par un calculateur (C), **caractérisée en ce que** le réservoir (62) de liquide de frein est relié auxdites pompes (50) par des premières électrovalves (68) commandées par le calculateur (C) et est indépendant du maître-cylindre (10) et qu'un orifice calibré (76) et un clapet anti-retour (78) s'opposant au retour du liquide de frein vers le réservoir (62) raccordés en parallèle sont montés dans les conduits reliant le réservoir (62) à chaque première électrovalve (68).

2. Installation selon la revendication 1, **caractérisée en ce que** les premières électrovalves (68, 84) sont fermées en condition de repos et sont commandées en ouverture par le calculateur (C).

3. Installation selon la revendication 1 ou 2, **caractérisée en ce que** le réservoir (62) est monté sur le groupe hydraulique (52).

4. Installation selon l'une des revendications précédentes, **caractérisée en ce que** des secondes électrovalves (54) commandées par le calculateur (C) sont montées dans les circuits d'alimentation des freins de roues (34) entre les sorties (30, 32) du maître-cylindre et les sorties des pompes (50).

5. Installation selon la revendication 4, **caractérisée en ce que** les secondes électrovalves (54) sont ouvertes en position de repos et sont commandées en fermeture par le calculateur (C).

6. Installation selon la revendication 5, **caractérisée en ce que** des clapets anti-retour (58) sont montés en parallèle sur les secondes électrovalves (54) et s'opposent au retour du liquide de frein depuis les freins de roues vers le maître-cylindre.

7. Installation selon l'une des revendications précédentes, **caractérisée en ce que** le maître-cylindre (10) est un maître-cylindre tandem à deux chambres de travail (16, 18) et à deux pistons (20, 22) non équipés de clapets.

## Claims

1. Braking installation for a motor vehicle, comprising a brake fluid reservoir (62), a master cylinder (10) controlled by a brake pedal (14) and connected to feed circuits for wheel brakes (34), and a hydraulic unit (52) comprising brake-fluid pressure pumps (50), connected to wheel-brake feed circuits and controlled by a computer C, **characterized in that** the brake fluid reservoir (62) is linked to said pumps (50) by the first solenoid valves (68) controlled by the computer C and is separate from the master cylinder (10) and **in that** a calibrated orifice (76) and a non-return valve (78) preventing the passage of brake fluid towards the reservoir, connected in parallel, are assembled in conduits linking the reservoir (62) to each first solenoid valve (68).

2. Installation according to Claim 1, **characterized in that** the first solenoid valves (68, 84) are closed in idle state and opened by the computer C.

3. Installation according to Claim 1 or 2, **characterized in that** the reservoir (62) is fitted on the hydraulic unit (52).

4. Installation according to any of the preceding claims, **characterized in that** the second solenoid valves (54) controlled by the computer C are assembled in the feed circuits of the wheel brakes (34) between the outputs (30, 32) of the master cylinder and the outputs of the pumps (50).

5. Installation according to Claim 4, **characterized in that** the second solenoid valves (54) are open in idle state and closed by the computer C.

6. Installation according to Claim 5, **characterized in that** the non-return valves (58) are fitted in parallel on the second solenoid valves (54) and prevent the backflow of brake fluid from the wheel brakes to the master cylinder.

7. Installation according to any of the preceding claims, **characterized in that** the master cylinder (10) is a tandem master cylinder with two pumping chambers (16, 18) and two pistons (20, 22) not fitted with valves.

## Patentansprüche

1. Bremsanlage für Kraftfahrzeug, mit einem Bremsflüssigkeitsbehälter (62), einem über ein Bremspedal (14) betätigten und mit Kreisen zur Versorgung von Radbremsen (34) verbundenen Hauptzylinder (10), und mit einer hydraulischen Gruppe (52), die Pumpen (50) zum Aufbauen des Druck der Bremsflüssigkeit umfasst, welche mit dem Kreis zur Versorgung der Radbremsen verbunden und durch einen Rechner (C) gesteuert sind, **dadurch gekennzeichnet, dass** der Bremsflüssigkeitsbehälter (62) mit den Pumpen (50) über erste Elektroventile (68) verbunden ist, die durch den Rechner (C) gesteuert sind, und vom Hauptzylinder (10) unabhängig ist, und dass eine kalibrierte Öffnung (76) und ein dem Rückfluss der Bremsflüssigkeit zum Behälter (62) entgegenwirkendes Rückschlagventil (78), welche parallelgeschaltet sind, in den Leitungen angebracht sind, die den Behälter (62) mit jedem ersten Elektroventil (68) verbinden.

2. Anlage nach Anspruch 1, **dadurch gekennzeichnet, dass** die ersten Elektroventile (68, 84) im Ruhezustand geschlossen sind und vom Rechner (C) zur Öffnung gesteuert werden.

3. Anlage nach Anspruch 1 oder 2, **dadurch gekennzeichnet, dass** der Behälter (62) an der hydraulischen Gruppe (52) angebracht ist.

4. Anlage nach einem der vorhergehenden Ansprüche, **dadurch gekennzeichnet, dass** vom Rechner (C) gesteuerte zweite Elektroventile (54) in den Kreisen zur Versorgung der Radbremsen (32) zwischen den Ausgängen (30, 32) des Hauptzylinders und der Ausgänge der Pumpen (50) angebracht sind.

5. Anlage nach Anspruch 4, **dadurch gekennzeichnet, dass** die zweiten Elektroventile (54) im Ruhezustand geöffnet sind und vom Rechner (C) zur Schließung gesteuert werden.

6. Anlage nach Anspruch 5, **dadurch gekennzeichnet, dass** an den zweiten Elektroventilen (54) Rückschlagventile (58) parallelgeschaltet angebracht sind und dem Rückfluss der Bremsflüssigkeit von den Radbremsen zum Hauptzylinder entgegenwirken.

7. Anlage nach einem der vorhergehenden Ansprüche, **dadurch gekennzeichnet, dass** der Hauptzylinder (10) ein Tandem-Hauptzylinder mit zwei Arbeitskammern (16, 18) und zwei Kolben (20, 22) ist, welche nicht mit Ventilen ausgestattet sind.
